# EUROPÄISCHE PATENTSCHRIFT

(11) **EP 4 045 276 B1**
(45) Veröffentlichungstag und Bekanntmachung des Hinweises auf die Patenterteilung: **11.12.2024**
(21) Anmeldenummer: 20828515.5
(22) Anmeldetag: 15.10.2020
(51) Int. Cl.: B29C 48/305, B29C 48/92, B29C 48/25, B29C 48/495, B29C 48/21, B29C 48/08

(54) **ANLAGE ZUM HERSTELLEN EINER KOEXTRUDIERTEN MEHRSCHICHTENFOLIE, VORRICHTUNG ZUM KOEXTRUDIEREN EINES MEHRLAGIGEN KOEXTRUSIONSVERBUNDES UND VERFAHREN ZUM KOEXTRUDIEREN SOWIE VERFAHREN ZUM BETREIBEN EINER DIESBEZÜGLICHEN ANLAGE UND/ODER VORRICHTUNG**
PLANT FOR PRODUCING A COEXTRUDED MULTI-LAYER FILM, APPARATUS FOR COEXTRUDING A MULTI-LAYERED COEXTRUSION COMPOSITE AND METHOD FOR COEXTRUDING AND ALSO METHOD FOR OPERATING A PLANT AND/OR APPARATUS FOR THIS PURPOSE
INSTALLATION DE FABRICATION D'UN FILM MULTICOUCHE COEXTRUDÉ, DISPOSITIF DE COEXTRUSION D'UN COMPOSITE DE COEXTRUSION MULTICOUCHE ET PROCÉDÉ DE COEXTRUSION AINSI QUE PROCÉDÉ POUR FAIRE FONCTIONNER UNE INSTALLATION ET/OU UN DISPOSITIF À CET EFFET

(30) Priorität: 15.10.2019 DE 102019127777
(43) Veröffentlichungstag der Anmeldung: 24.08.2022
(73) Patentinhaber: Reifenhäuser GmbH & Co. KG Maschinenfabrik, 53844 Troisdorf (DE)
(72) Erfinder: SIEBIGTEROTH, Peter, 53783 Eitorf (DE)
(74) Vertreter: Meissner Bolte Partnerschaft mbB
(86) Internationale Anmeldenummer: PCT/DE2020/200088
(87) Internationale Veröffentlichungsnummer: WO 2021/073698

(56) Entgegenhaltungen:
- EP-A1- 0 418 681
- EP-B1- 0 418 681
- DE-C1- 10 020 202
- DE-C1- 19 802 646
- JP-A- H08 112 852
- US-A1- 2012 313 275

## Beschreibung

Die Erfindung betrifft eine Vorrichtung zum Koextrudieren eines mehrlagigen Koextrusionsverbundes , eine entsprechende Anlage und ein entsprechendes Verfahren.

Aus dem Stand der Technik ist bekannt, Querschnitte von Materialschmelzekanälen durch manuell angetriebene Einstellelemente eines Koextrusionsadapters zu manipulieren, um hierdurch unterschiedliche Einzelschichtdicken bzw. Einzelschichtprofile an Einzelschichten eines mehrlagigen Koextrusionsverbundes erzeugen zu können.

Beispielsweise ist in der EP 1 621 320 A1 ein Koextrusionsadapter für eine Extrusionsanlage bekannt, welcher sich durch einen Zentralkanal und etliche Koextrusionskanäle auszeichnet, wobei in dem Koextrusionsadapter eine Vielzahl an Stellelementen vorgesehen sind, welche mittels manuell betätigbarer Verstellelemente derart von außerhalb ansteuerbar sind, dass mit diesen Stellelementen eine Querschnittsmanipulation an Kanälen des Koextrusionsadapters erzielt werden kann.

Ferner ist aus der DE 42 03 755 A1 ein Verfahren zum Regeln einzelner Schichtdicken von mehreren Schichten einer mehrschichtigen durch Koextrusion herzustellenden Kunststoffbahn bekannt, bei welchem einzelne durch Kanäle geführte Schmelzeströme innerhalb eines Koextrusionsadapters eines Koextrusionswerkzeugs zu einem Strang aus einzelnen Schichten zusammengeführt werden, und bei welchem die jeweilige Gesamtschichtdicke der einzelnen Schichten noch vor dem Austritt aus einem Düsenteil des Koextrusionswerkzeugs ermittelt wird, und bei welchem die hierbei ermittelten Messdaten mit Sollwertvorgaben verglichen werden, wobei das Ergebnis bei Abweichung des Soll-Ist-Wert-Vergleiches zum Verändern eines Kanalgesamtquerschnitts eines der Kanäle für die einzelne Schmelzeströme zum Erzeugen der Schichten verwendet wird.

Weiter werden in EP0418681A1, DE19802646C1 und JPH08112852A Vorrichtungen nach dem Oberbegriff des Anspruchs 1 offenbart.

Nachteilig bei dem bisherigen Stand der Technik sind insbesondere die unzureichenden und meist auch langwierigen Einstellmöglichkeiten einer Schichtdicke oder eines Schichtdickenprofils an Einzelschichten an einem mehrlagigen Koextrusionsverbundes während des Extrudierens des mehrlagigen Koextrusionsverbundes, insbesondere aufgrund von unmittelbar an einem Koextrusionsadapters vorherrschenden Temperaturen.

Der Erfindung liegt die Aufgabe zugrunde, gattungsgemäßen Stand der Technik zum Erzeugen von Mehrschichtfolien weiterzuentwickeln und insbesondere bekannte Nachteile zu überwinden.

Die vorliegende Aufgabe wird mit den Merkmalen der unabhängigen Ansprüchen gelöst.

Hierbei wurde erkannt, dass es von Vorteil ist, insbesondere Schichtdicken bzw. Schichtdickenprofile eines extrudierten mehrlagigen Koextrusionsverbundes bzw. einer koextrudierten Mehrschichtenfolie erst stromab eines Düsenteils eines Koextrusionswerkzeugs oder dergleichen zu messen, da sich dort das Schichtmaterial bereits signifikant gegenüber einer sich im Düsenteil befindlichen eher noch plastifizierten Schichtschmelze abgekühlt hat, so dass gewonnene Messdaten insofern nicht oder nur noch vernachlässigbar gering durch Schrumpfung oder dergleichen verfälscht werden.

Hierdurch können die Einstellelemente in Abhängigkeit von diesen präziser ermittelten Messdaten auch entsprechend präziser eingestellt werden, so dass Schichtdicken bzw. Schichtdickenprofile genauer erzeugt werden können.

Insbesondere kann hierdurch ein vorteilhafter inline-Abgleich zwischen den Einstellelementen und den Messdaten erfolgen.

Dies führt dazu, dass die vorliegende Anlage wesentlich effektiver betrieben werden kann.

Zunächst sei darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

An dieser Stelle sei noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Der Begriff "Schichtdicke" beschreibt vorliegend, dass eine Einzelschicht oder Kombinationen aus solchen Einzelschichten über Ihre Gesamtbreiten gesehen, also quer zu ihrer Längserstreckung in Maschinenrichtung gesehen, eine gleichbleibende Schichtdicke aufweist.

Hiervon abweichend beschreibt der Begriff "Schichtdickenprofil", dass eine Einzelschicht oder Kombinationen aus solchen Einzelschichten über Ihre Gesamtbreiten gesehen, also quer zu ihrer Längserstreckung in Maschinenrichtung gesehen, eine profilierte Schichtdicke bzw. ein Schichtdickenprofil aufweist. Dies wird insbesondere durch eine Vielzahl an Einstellelementen pro Koextrusionskanal erzielt, welche über die Kanalbreite gesehen nebeneinander angeordnet und hierbei bevorzugt einzeln bzw. individuell betätigbar sind.

Die vorliegende Antriebseinheit kann unterschiedlichst ausgestaltet sein, vorzugsweise mit Aktuatoren zum Antreiben der Verstelleinrichtungen, wobei unter dem Begriff "Aktuator" eine antriebstechnische Einrichtung verstanden werden soll, welche im einfachsten Fall elektrische Signale in mechanische Bewegungen umwandeln bzw. Veränderungen physikalischer Größen, wie etwa Druck, Temperatur oder dergleichen, bewirken kann.

Die Antriebseinheit kann beispielsweise Einzelantriebe, Piezo-Stellelemente, Linearzylinder, Pneumatik oder dergleichen umfassen. Ferner kann eine alternativer Antriebseinheit kumulativ oder alternativ auch einen Manipulator bzw. einen Knickarm-Roboter umfassen.

Der Begriff "Controllereinheit" beschreibt im Sinne der Erfindung eine Einrichtung, welche dazu eingerichtet ist, einen Betrieb der Anlage in Abhängigkeit von Daten bzw. Datenverknüpfungen einzelner Anlagenkomponenten zu steuern bzw. zu regeln, wobei die Daten als elektronische oder digitale Datensätze oder dergleichen an der Anlage vorliegen können, sei es online, berechnet, eingelesen und/oder gespeichert.

Ferner beschreibt der Begriff "Koextrusionsadapter" beschreibt im Sinne der Erfindung eine Einrichtung, mittels welcher in der Regel unterschiedliche Materialschmelzen aus verschiedenen Extrudern als mehrlagiger Materialstrang vereinigt werden, welche anschließend einem Düsenteil bzw. einer Extrusionsdüse zugeführt werden. Mittels des Koextrusionsadapters kann bevorzugt in Adapterbereichen des Zusammenfließens der einzelnen Materialschmelzen durch Anpassen bzw. Verändern eines oder mehrerer Schmelzekanalprofile ein Gesamtprofil von profilierten Einzelschichten erstellt werden. Nach dem Durchfließen des Düsenteils bzw. der Extrusionsdüse und nach dem Austritt aus einem Extrusionsdüsenspalt des Düsenteils liegt ein mehrlagiger Koextrusionsverbund mit einer gewünschten Gesamt- und Einzelschichtverteilung vor. Ein derartiger Koextrusionsadapter ist oftmals auch mit dem Ausdruck "Feedblock" gekennzeichnet.

Der Ausdruck "Zentralkanal" kennzeichnet vorliegend einen innerhalb eines Koextrusionsadapters angeordneten Kanal zum Erzeugen der mittleren Schicht eines mehrlagigen Koextrusionsverbundes.

Demgegenüber bezeichnet der Begriff "Koextrusionskanal" einen innerhalb des Koextrusionsadapters vorhandenen Nebenkanal zum Erzeugen einer weiteren Schicht eines mehrlagigen Koextrusionsverbundes, welche neben der mittleren Schicht angeordnet ist.

Der Begriff "Einstellelemente" beschreibt im Sinne der Erfindung jegliche Einrichtungen, mittels welchen Kanalquerschnitte von materialführenden Kanälen (Zentralkanal und/oder Koextrusionskanäle) eines Koextrusionsadapters manipuliert werden können. In der Regel sind die Einstellelemente innerhalb des Koextrusionsadapters und zumindest auch teilweise innerhalb eines Kanals des Koextrusionsadapters angeordnet.

Beispielsweise ist ein derartiges Einstellelement als ein Schieberelement ausgestaltet, welches quer in einen materialführenden Kanal eingebracht werden kann, um hier nur eine einzige Möglichkeit zu nennen. Oder ein solches Einstellelement kann um eine Rotationsachse innerhalb eines materialführenden Kanals geschwenkt werden.

Speziell durch eine Vielzahl an einem Kanal zugeordneten Einstellelementen besteht die Möglichkeit, sehr individuell auf Kanalquerschnitte eines an einem Koextrusionskanal vorhandenen Kanals einzuwirken, sei es hinsichtlich der Breite und/oder der Höhe des jeweiligen Kanals, wodurch auch profilierte Einzelschichten erzeugt werden können.

Insofern sind solche Einstellelemente oftmals auch als "Profiler" bezeichnet.

Beispielsweise sind über eine Gesamtbreite eines Kanals in dem Koextrusionsadapter mehrere Einstellelemente bzw. Profiler angeordnet, beispielsweise 3 bis 10 oder mehr solcher Einstellelemente, wodurch individuell profilierte Einzelschichten an dem Koextrusionsverbund erzeugbar sind.

Die Begrifflichkeit "Verstelleinrichtung" beschreibt vorliegend Einrichtungen, mittels welchen ein in dem Koextrusionsadapter angeordnetes Einstellelement von außerhalb des Koextrusionsadapters betätigt werden kann. In der Regel umfasst eine solche Verstelleinrichtung hierzu ein in einer Teilgewindebohrung drehbar gelagertes Stellelement, welches an seinem außenliegenden antriebsseitigen Ende eine Aufnahme für ein Werkzeug besitzt. Daneben umfasst die Verstelleinrichtung meist noch einen Messstift mit Markierungen, anhand festgestellt werden kann, wie weit ein Einstellelement in einen dazugehörigen Kanal hineinragt bzw. welcher Kanalquerschnitt letztendlich an dem Kanal eingestellt ist. Alternativ kann der vorhandene Kanalquerschnitt auch anhand eines Abstands eines Indexbolzens gegenüber einer Referenzebene bzw. Referenzfläche gemessen werden. Gegebenenfalls werden vorliegend zusätzliche Messwerkzeuge oder Messgerätes zur Hilfe genommen.

Die vorliegende Aufgabe wird nach einem zweiten Aspekt der Erfindung von einer Anlage zum Herstellen einer koextrudierten Mehrschichtenfolie mit wenigstens einer Extrudereinrichtung zum Bereitstellen von Materialschmelzen aus thermoplastischen Materialien, mit einer einen Koextrusionsadapter und ein Düsenteil umfassenden Vorrichtung zum Koextrudieren eines mehrlagigen Koextrusionsverbundes aus miteinander verbundenen Einzelschichten, wobei der Koextrusionsadapter einen Zentralkanal zum Erzeugen einer Zentralschicht des Koextrusionsverbundes, wenigstens einen Koextrusionskanal zum Erzeugen wenigsten einer mit der Zentralschicht wechselwirkenden, weiteren Schicht des Koextrusionsverbundes, eine Vielzahl an verlagerbaren Einstellelementen zum Einstellen von Schichtdicken und/oder Schichtdickenprofilen an Einzelschichten des Koextrusionsverbundes sowie Verstelleinrichtungen zum Betätigen der Einstellelemente aufweist, mit einer Antriebseinheit zum Antreiben der Verstelleinrichtungen, mit einer Messeinrichtung zum Messen von Schichtdicken und/oder Schichtdickenprofilen an Einzelschichten des mehrlagigen Koextrusionsverbundes, und mit einer Anlagensteuerung zum Steuern der Anlage, wobei die Anlagensteuerung eine Controllereinheit umfasst, welche dazu eingerichtet ist, dass Relativpositionen von Einstellelementen in Abhängigkeit von an der Anlage eingelesenen und/oder gespeicherten Rezepturen für thermoplastische Materialien für Einzelschichten einer koextrudierten Mehrschichtfolie automatisch einstellbar sind.

Die vorliegende Anlage kann ebenfalls sehr effektiv Betrieben werden, wenn Einstellungen an der Anlage durch gespeicherte Rezepturen für thermoplastische Materialien für Einzelschichten einer koextrudierten Mehrschichtfolie automatisch vorgenommen werden können.

Insbesondere können mittels der Controllereinheit in Abhängigkeit von den vorliegenden Messdaten der stromab des Düsenteils angeordneten Messeinrichtung und/oder in Abhängigkeit von den Rezepturen auch die Extrudereinrichtungen der Anlage manipuliert werden können.

Die vorliegende Aufgabe wird nach einem dritten Aspekt der Erfindung von einer Anlage zum Herstellen einer koextrudierten Mehrschichtenfolie mit wenigstens einer Extrudereinrichtung zum Bereitstellen von Materialschmelzen aus thermoplastischen Materialien, mit einer einen Koextrusionsadapter und ein Düsenteil umfassenden Vorrichtung zum Koextrudieren eines mehrlagigen Koextrusionsverbundes aus miteinander verbundenen Einzelschichten, wobei der Koextrusionsadapter einen Zentralkanal zum Erzeugen einer Zentralschicht des Koextrusionsverbundes, wenigstens einen Koextrusionskanal zum Erzeugen wenigsten einer mit der Zentralschicht wechselwirkenden, weiteren Schicht des Koextrusionsverbundes, eine Vielzahl an verlagerbaren Einstellelementen zum Einstellen von Schichtdicken und/oder Schichtdickenprofilen an Einzelschichten des Koextrusionsverbundes sowie Verstelleinrichtungen zum Betätigen der Einstellelemente aufweist, mit einer Antriebseinheit zum Antreiben der Verstelleinrichtungen, mit einer Messeinrichtung zum Messen von Schichtdicken und/oder Schichtdickenprofilen an Einzelschichten des mehrlagigen Koextrusionsverbundes, und mit einer Anlagensteuerung zum Steuern der Anlage, wobei die Anlage eine Ausgabeeinheit umfasst, welche dazu eingerichtet ist, Relativpositionen von Einstellelementen und/oder Extrusionskanalquerschnitten innerhalb des Koextrusionsadapters, insbesondere innerhalb eines Extrusionskanals des Koextrusionsadapters, und/oder Kanalquerschnitte innerhalb des Koextrusionsadapters zu visualisieren, insbesondere anhand eines graphischen Modells darzustellen.

Durch die vorgeschlagene Visualisierung bzw. graphische Darstellung lassen sich vorliegende Einstellungen durch einen Anlagenbediener optisch schneller erfassen, insbesondere werden Fehler bzw. Fehlstellungen schneller erkannt, wodurch die Anlage insgesamt effektiver betrieben werden kann.

Insbesondere können designierte Einstellungen oder Einstellabläufe an einem Koextrusionsadapter, simuliert werden, und kumulativ einem Anlagenbediener vorteilhaft optisch an der Ausgabeeinheit dargestellt werden.

Hierbei kann die Ausgabeeinheit durch eine stationäre bzw. bevorzugt mobile Displayeinrichtung oder dergleichen realisiert sein.

An dieser Stelle sei noch erwähnt, dass es vorteilhaft ist, wenn die Anlage eine Controllereinheit umfasst, welche dazu eingerichtet ist, dass die Antriebseinheit, insbesondere Aktuatoren hiervon, und/oder insbesondere Verstelleinrichtungen und/oder Kanalquerschnitte von Kanälen des Koextrusionsadapters und/oder letztendlich auch Einzelschichtdicken und/oder Einzelschichtdickenprofile eines Koextrusionsverbundes bzw. einer Mehrschichtenfolie automatisch in Abhängigkeit von einem oder mehreren der vorliegend erläuterten Merkmalen manipulierbar ist.

Es ist ebenfalls zweckmäßig, wenn die Anlage eine Eingabeeinheit aufweist, welche dazu eingerichtet ist, insbesondere Schichtdicken und/oder Schichtdickenprofile, und/oder Kombinationen hiervon zu programmieren.

Beispielsweise kann eine derartige Eingabeeinheit mittels einer Displayeinrichtung oder einer Datenschnittelle sein.

Eine bevorzugte Ausführungsvariante, welche im Übrigen auch unabhängig von den übrigen Merkmalen der Erfindung vorteilhaft ist, sieht vor, dass die Anlage eine Speichereinrichtung zum Speichern von Daten bezüglich Rezepturen für thermoplastische Materialien für Einzelschichten umfasst, wobei die Speichereinrichtung eine Speicherdatenschnittstelle zu der Anlagensteuerung aufweist. Hierdurch gelingt es, an der Anlage eine beliebig hohe Anzahl an Rezepturen vorzuhalten und diese idealerweise mit Einstellungen insbesondere von Einstellelementen des Koextrusionsadapters zu kombinieren.

Insofern ist es vorteilhaft, wenn die Anlage eine Speichereinrichtung zum Speichern von Daten bezüglich Relativpositionen von Einstellelementen in Bezug auf Rezepturen für thermoplastische Materialien für diesbezügliche Einzelschichten aufweist.

In diesem Zusammenhang ist es vorteilhaft, wenn die Anlage eine Speichereinrichtung zum Speichern von Daten bezüglich Schichtdickeneinstellungen in Abhängigkeit von einem dazugehörigen Koextrusionsverbund aufweist.

Eine weitere vorteilhafte Ausführungsvariante sieht vor, dass die Anlagensteuerung elektrische Datenschnittstellen, insbesondere elektronische bzw. digitale Datenschnittstellen, zum Kommunizieren mit den vorliegenden Controllereinheiten und/oder Speichereinrichtungen aufweist, insbesondere auch in Bezug auf bereitgestellten Betriebsdaten anderer Anlagen. Hierdurch können bereits gewonnene Daten von anderen Herstellprozessen für die aktuelle Einstellung der Anlage automatisch verwendet werden.

Darüber hinaus ist es zweckmäßig, wenn die Anlage eine Vorrichtung nach einem der hier offenbarten Merkmale umfasst.

Die Aufgabe der Erfindung wird nach einem vierten Aspekt von einer Vorrichtung zum Koextrudieren eines mehrlagigen Koextrusionsverbundes aus miteinander verbundenen Einzelschichten aus thermoplastischen Materialien, insbesondere einer koextrudierten Mehrschichtfolie, mit einem Koextrusionsadapter, welcher einen Zentralkanal zum Erzeugen einer Zentralschicht des Koextrusionsverbundes, wenigstens einen Koextrusionskanal zum Erzeugen wenigsten einer mit der Zentralschicht wechselwirkenden, weiteren Schicht des Koextrusionsverbundes, eine Vielzahl an verlagerbaren Einstellelementen zum Einstellen von Schichtdicken oder Schichtdickenprofilen an den Einzelschichten des Koextrusionsverbundes und Verstelleinrichtungen zum Betätigen der Einstellelemente aufweist, und mit einem Düsenteil, durch welches hindurch der mehrlagige Koextrusionsverbund ausgetragen wird, gelöst, wobei stromab des Düsenteils eine Messeinrichtung zum automatischen Messen von Schichtdicken oder Schichtdickenprofilen des mehrlagigen Koextrusionsverbundes angeordnet ist, und wobei die Vorrichtung dazu eingerichtet ist, mittels aus gewonnenen Messdaten der Messeinrichtung die Vielzahl an verlagerbaren Einstellelementen automatisch zu manipulieren.

Durch die Messung von Schichtdicken bzw. Schichtdickenprofilen an Einzelschichten stromab des Düsenteils können erzielte Schichtdicken bzw. Schichtdickenprofilen besonders exakt ermittelt werden, wobei hieraus ebenfalls exakter vorliegende Messdaten dazu genutzt werden, die Einstellelemente an dem Koextrusionsadapter schneller und präziser in Abhängigkeit dieser Messdaten zu verstellen. Insbesondere kann auf weitere Rechenschritte oder dergleichen zum Berechnen einer Schrumpfung der Schichtdicken bzw. diesbezüglicher Profile aufgrund einer weiteren Abkühlung oder dergleichen bevorzugt zur Gänze verzichtet werden, was nicht nur zu einer schnelleren Verstellung von Einstellelementen führt.

Hierdurch kann die erfindungsgemäße Vorrichtung mit einem signifikant verringerten Aufwand eine Schichtdickenveränderung bzw. -profilierung an dem Koextrusionsadapter durchführen.

Die Aufgabe der Erfindung wird nach einem fünften Aspekt von einer Vorrichtung zum Koextrudieren eines mehrlagigen Koextrusionsverbundes aus miteinander verbundenen Einzelschichten aus thermoplastischen Materialien, insbesondere einer koextrudierten Mehrschichtfolie, mit einem Koextrusionsadapter, welcher einen Zentralkanal zum Erzeugen einer Zentralschicht des Koextrusionsverbundes, wenigstens einen Koextrusionskanal zum Erzeugen wenigsten einer mit der Zentralschicht wechselwirkenden, weiteren Schicht des Koextrusionsverbundes, eine Vielzahl an verlagerbaren Einstellelementen zum Einstellen von Schichtdicken oder Schichtdickenprofilen an den Einzelschichten des Koextrusionsverbundes und Verstelleinrichtungen zum Betätigen der Einstellelemente aufweist, und mit einem Düsenteil, durch welches hindurch der mehrlagige Koextrusionsverbund ausgetragen wird, gelöst, wobei die Vorrichtung einen oder mehrere von dem Koextrusionsadapter beabstandet angeordnete Aktuatoren zum automatischen Antreiben der Verstelleinrichtungen aufweist, wobei die Aktuatoren permanent oder nur temporär mit den Verstelleinrichtungen wirkverbunden sind.

Weist die Vorrichtung einen von dem Koextrusionsadapter beabstandet angeordneten Aktuator oder mehrere von dem Koextrusionsadapter beabstandet angeordnete Aktuatoren, mittels welchen die Verstelleinrichtungen automatisch angetrieben werden können, insbesondere in Abhängigkeit von ermittelten und/oder gespeicherten Daten, sind die Aktuatoren einerseits besser vor kritischen Hitzeeinflüssen an der Koextrusionsvorrichtung geschützt. Andererseits können eine Vielzahl an Aktuatoren wesentlich kompakter zu einer Antriebseinheit zusammengefasst werden, wenn sie beabstandet von dem Koextrusionsadapter angeordnet sind.

Sind die Aktuatoren beabstandet, aber permanent mit den Verstelleinrichtungen wirkverbunden, können die Aktuatoren verzögerungsfrei mit den Verstelleinrichtungen wechselwirken, beispielsweise im Sinne eines Permanentdirektantriebs, gegebenenfalls unter Zwischenschaltung eines Getriebes oder dergleichen.

Sind die Aktuatoren hingegen nur temporär mit den Verstelleinrichtungen wirkverbunden, können die Aktuatoren bei Nichtgebrauch von den Verstelleinrichtungen problemlos noch weiter beabstandet in einer Bereithaltungsposition verbracht sein, so dass sie einer dauerhaften Hitzebelastung vorteilhaft entzogen werden können. Hierbei wird dann etwa ein einzelner Aktuator bedarfsweise und nacheinander an die Verstelleinrichtungen heranverlagert, oder aber mehrere Aktuatoren werden mit den Verstelleinrichtungen temporär wirkverbunden.

Der Begriff "Abstand" beschreibt hierbei eine temporär erzeugte Lücke zwischen den Verstelleinrichtungen bzw. dem Koextrusionsadapter und den Aktuatoren, insbesondere zwischen einem mit Kanälen versehenen Massivblock des Koextrusionsadapters und den Aktuatoren.

Vorteilhaft ist es, wenn zwischen einem Aktuator und dem Koextrusionsadapter ein Abstand von mehr als 50 mm, vorzugsweise von mehr als 100 mm oder mehr als 200 mm, vorhanden ist, sei es permanent oder temporär. Hierdurch kann nicht nur ein guter Hitzeschutz für die Aktuatoren erzielt werden, sondern darüber hinaus ergeben sich auch neue Konstruktionsmöglichkeiten insbesondere hinsichtlich des Koextrusionsadapters oder auch der Antriebseinheit. Beispielsweise können Kräfte und/oder Drehmoment übertragende Funktionsteile der Verstelleinrichtungen baulich enger beieinander an dem Koextrusionsadapter angeordnet werden, wodurch Letzterer kompakter bereitgestellt werden kann.

Damit die Koextrusionsvorrichtung trotz der vorgeschlagenen beabstandeten Aktuatoren insgesamt nicht zu ausladend baut, beträgt der vorstehend beschriebene Abstand bevorzugt weniger als 500 mm oder weniger als 400 mm.

In diesem Zusammenhang ist es vorteilhaft, wenn unmittelbar nebeneinander angeordnete Verstelleinrichtungen mit einem Komponentenabstand von weniger als 100 mm, vorzugsweise von weniger als 70 mm und besonders bevorzugt von weniger als 50 mm, voneinander beabstandet an dem Koextrusionsadapter angeordnet sind.

Insbesondere ist es vorteilhaft, wenn starre Stangenelemente der Verstelleinrichtungen, durch eine Strecke von weniger als 100 mm, vorzugsweise von weniger als 70 mm und besonders bevorzugt von weniger als 50 mm, voneinander beabstandet an dem Koextrusionsadapter angeordnet sind.

Der Komponentenabstand ist hierbei als orthogonal verlaufende Strecke zwischen zwei Bauteilen oder Bauteilgruppen unmittelbar benachbarter Verstelleinrichtungen definiert, welche innerhalb des Koaxialadapters angeordnet sind.

Des Weiteren ist es besonders zweckmäßig, wenn zwischen einer Verstelleinrichtung und einem Aktuator, insbesondere zwischen einem eingangsseitigen Antriebselement einer Verstelleinrichtung und einem ausgangseitigen Abtriebselement eines Aktuators, ein flexibles Überbrückungselement, insbesondere ein flexibles Hitzeüberbrückungselement, angeordnet ist.

In der Regel umfassen die an einem Koextrusionsadapter verbauten Verstelleinrichtungen starr ausgebildete Stangenelemente als eingangsseitige Antriebselemente. Ebenso ist es im Stand der Technik üblich, als ausgangseitige Abtriebselemente von Aktuatoren starr ausgebildete Stangenelemente einzusetzen.

Hierbei liegen diesbezügliche Antriebs- und Abtriebselemente auf einer gemeinsamen Raumachse bzw. Rotationsachse, so dass bei bekannten Koextrusionsadaptern Abstände zwischen Verstelleinrichtungen einerseits und zwischen Aktuatoren andererseits gegenseitig voneinander anhängig sind.

Oftmals sind ausgangseitige Abtriebselemente und eingangsseitige Antriebselemente sogar als ein gemeinsames Bauteil ausgestaltet.

Mittels der Zwischenschaltung von flexiblen Überbrückungselementen sind räumliche Anordnungszwänge zwischen Verstelleinrichtungen und Aktuatoren weitestgehend ausgehebelt und es ergeben sich weitere vorteilhafte Anordnungsmöglichkeiten.

Das vorliegende flexible Überbrückungselement ist hierbei als eine Art Kardaneinrichtung anzusehen und es kann baulich unterschiedlich ausgestaltet sein; beispielsweise als Gelenkteil mit einem oder mehreren Gelenken. Oder das flexible Überbrückungselement ist als biegsame Welle mit biegsamen Grundköper ausgebildet.

Der Begriff "Hitzeüberbrückungselement" beschreibt nochmals deutlicher, dass durch die Möglichkeit der erfindungsgemäßen Beabstandung, insbesondere auch ein Hitzeschutz für die Aktuatoren erzielt wird.

Es hat sich von Vorteil erwiesen, wenn ein eingangsseitiges Antriebselement einer Verstelleinrichtung und ein ausgangsseitiges Abtriebselement eines Aktuators verschiedene Rotationsachsen aufweisen, wobei die Rotationsachse versetzt zueinander angeordnet sind.

Weisen entsprechende Antriebs- und Abtriebselemente unterschiedliche Fluchten auf, eröffnen sich zur Realisierung eines Koextrusionsadapters weitere vorteilhafte konstruktive Möglichkeiten. Beispielsweise sind die Antriebs- und Abtriebselemente winkelig mit einem gemeinsamen Schnittpunkt zueinander angeordnet, oder windschief zueinander. Es ist auch denkbar, dass sie parallel zueinander angeordnet sind.

Jedenfalls ergibt sich mittels des vorliegenden flexiblen Überbrückungselements eine besonders gute Überbrückbarkeit einer Lücke (Abstand) zwischen einer an dem Koextrusionsadapter verbauten Verstellmechanik und einem hiermit wechselwirkenden Aktuator bei gleichzeitiger Hitzeentkoppelung.

Es ist außerdem von Vorteil, wenn eingangsseitige Antriebselemente einer Verstelleinrichtung enger beieinander angeordnet sind als ausgangsseitige Abtriebselemente eines Aktuators, da hierdurch insbesondere der Koextrusionsadapter kompakter realisierbar ist.

Sind mehrere Aktuatoren zu einer Antriebseinheit, insbesondere zu einem Aktuatorenpaket, zusammengefasst, kann die vorliegende Koextrusionsvorrichtung und insbesondere auch deren Koextrusionsadapter kompakter gebaut sein.

Eine alternative Ausführungsvariante sieht vor, dass wenigstens einen Manipulator mit einem oder mehreren Aktuatoren vorhanden ist, mittels welchem wenigstens ein Aktuator mit den Verstelleinrichtungen des Koextrusionsadapters temporär in Wirkkontakt bringbar oder mittels welchem wenigstens ein Aktuator von den Verstelleinrichtungen des Koextrusionsadapters temporär beabstandbar ist.

Besonders vorteilhaft ist es darüber hinaus, wenn die vorliegende Antriebseinheit automatisiert in Abhängigkeit von einer gemessenen Schichtdicke und/oder einem gemessenen Schichtdickenprofil, von einer errechneten Schichtdicke und/oder einem errechneten Schichtdickenprofil und/oder einer designierten Schichtdicke und/oder einem designierten Schichtdickenprofil manipulierbar ist. Hierdurch gelingt eine Einstellung insbesondere von Querschnitten von in dem Koextrusionsadapter angeordneten Materialschmelzekanäle besonders vorteilhaft.

Kumulativ oder alternativ ist es vorteilhaft, wenn die Antriebseinheit automatisiert in Abhängigkeit von einer prognostizierten Schichtdicke und/oder einem prognostizierten Schichtdickenprofil manipulierbar ist.

Ferner sei angemerkt, dass im Sinne der Erfindung die Begrifflichkeiten "Steuerung" und "Regelung" und insofern auch "steuern" und "regeln" synonym verwendet werden, falls ausdrücklich hiervon nichts abweichendes bestimmt ist. Insofern betrifft die Anlagensteuereinrichtung auch eine Anlagenregeleinrichtung.

Die Aufgabe der Erfindung wird nach einem sechsten Aspekt auch noch von einem Verfahren zum Koextrudieren eines mehrlagigen Koextrusionsverbundes für eine Mehrschichtenfolie bestehend aus mehreren Einzelschichten gelöst, bei welchem Schichtdicken und/oder Schichtdickenprofile von Einzelschichten der Mehrschichtenfolie nach dem Austreten aus einem Düsenteil einer Koextrusionsvorrichtung gemessen und hierbei entsprechend Messdaten erzeugt werden, und bei welchem in Abhängigkeit von diesen Messdaten Schichtdicken und/oder Schichtdickenprofile des mehrlagigen Koextrusionsverbundes vor dem Düsenteils korrigiert, insbesondere inline korrigiert, werden. Dickenmessungen hinter dem Düsenteil liefern wesentlich exaktere Messdaten über die tatsächlich vorliegenden Schichtdicken bzw. Schichtdickenprofile des Endproduktes. Insofern kann die Koextrusionsvorrichtung mittels dieser Messdaten schneller und exakter eingestellt werden. Hierdurch kann das Verfahren effektiver durchgeführt werden.

Die Aufgabe der Erfindung wird nach einem siebten Aspekt auch noch von einem Verfahren zum Koextrudieren eines mehrlagigen Koextrusionsverbundes für eine Mehrschichtenfolie bestehend aus mehreren Einzelschichten gelöst, bei welchem Schichtdicken und/oder Schichtdickenprofile von Einzelschichten der Mehrschichtenfolie nach dem Austreten aus einem Düsenteil einer Koextrusionsvorrichtung gemessen und hierbei entsprechend Messdaten erzeugt werden, und bei welchem in Abhängigkeit von diesen Messdaten Einstellelemente zum Einstellen von Koextrusionskanälen der Koextrusionsvorrichtung manipuliert, insbesondere inline manipuliert, werden. Dickenmessungen hinter dem Düsenteil liefern wesentlich exaktere Messdaten über die tatsächlich vorliegenden Schichtdicken bzw. Schichtdickenprofile des Endproduktes. Insofern können die Einstellelemente der Koextrusionsvorrichtung mittels dieser Messdaten schneller und exakter eingestellt werden. Hierdurch kann das Verfahren effektiver durchgeführt werden.

Die Aufgabe der Erfindung wird nach einem achten Aspekt auch noch von einem Verfahren zum Koextrudieren eines mehrlagigen Koextrusionsverbundes für eine Mehrschichtenfolie bestehend aus mehreren Einzelschichten gelöst, bei welchem Schichtdicken und/oder Schichtdickenprofile an dem mehrlagigen Koextrusionsverbund mittels Einstellelemente zum Einstellen von Koextrusionskanälen der Koextrusionsvorrichtung manipuliert werden, wobei Relativpositionen von Einstellelementen innerhalb der Koextrusionskanäle in Abhängigkeit von an einer Anlagensteuerung gespeicherten Rezepturen für thermoplastische Materialien für Einzelschichten manipuliert werden. Auch hierdurch kann das Verfahren effektiver durchgeführt werden.

Die Aufgabe der Erfindung wird nach einem neunten Aspekt auch noch von einem Verfahren zum Koextrudieren eines mehrlagigen Koextrusionsverbundes für eine Mehrschichtenfolie bestehend aus mehreren Einzelschichten gelöst, bei welchem Schichtdicken und/oder Schichtdickenprofile an dem mehrlagigen Koextrusionsverbund mittels Einstellelemente zum Einstellen von Koextrusionskanälen der Koextrusionsvorrichtung manipuliert werden, und bei welchem Relativpositionen von Einstellelementen innerhalb der Koextrusionskanäle, insbesondere Absolutspalte von Extrusionskanalquerschnitten, an einer optischen Ausgabeeinheit insbesondere mittels eines graphischen Modells der Koextrusionsvorrichtung optisch angezeigt werden. Hierdurch sind Einstellungen intuitiv und damit schneller für Bedienpersonal erfassbar, so dass das Verfahren effektiver durchgeführt werden kann.

Die Aufgabe der Erfindung wird nach einem zehnten Aspekt auch noch von einem Verfahren zum Koextrudieren eines mehrlagigen Koextrusionsverbundes für eine Mehrschichtenfolie bestehend aus mehreren Einzelschichten gelöst, bei welchem Schichtdicken und/oder Schichtdickenprofile an dem mehrlagigen Koextrusionsverbund mittels Einstellelemente zum Einstellen von Koextrusionskanälen der Koextrusionsvorrichtung manipuliert werden, und bei welchem Simulationen von Relativpositionen von Einstellelementen innerhalb der Koextrusionskanäle an einer optischen Ausgabeeinheit insbesondere mittels eines graphischen Modells der Koextrusionsvorrichtung optisch angezeigt werden. Hierdurch sind Einstellungen intuitiv und damit schneller für Bedienpersonal erfassbar, so dass das Verfahren effektiver durchgeführt werden kann.

Die Aufgabe der Erfindung wird nach einem elften Aspekt auch noch von einem Verfahren zum Betreiben einer Anlage zum Herstellen einer koextrudierten Mehrschichtenfolie, insbesondere der vorliegenden Anlage nach einem der hier beschriebenen Merkmale, und/oder einer Vorrichtung zum Koextrudieren eines mehrlagigen Koextrusionsverbundes, insbesondere der vorliegenden Vorrichtung nach einem der hier beschriebenen Merkmale, unter Verwendung eines der vorstehend erläuterten Verfahren gelöst. Hierdurch können die entsprechende Anlage bzw. Vorrichtung effektiver betrieben werden.

Besonders vorteilhaft ist eine weitere Verfahrensvariante, bei welcher mittels automatischer Datenanalyse Einstellungen zum Optimieren eines Verfahrens zum Koextrudieren und/oder eines Verfahrens zum Betreiben der Anlage automatisch vorgenommen und/oder zur Auswahl automatisch vorgeschlagen werden. Insbesondere können Einstellungen an den vorliegenden Einstellelementen, Einstellungen an Aktuatoren, Einstellungen an Extrudern, oder dergleichen automatisch vorgenommen oder einem Anlagenbediener vorgeschlagen werden, wodurch die Herstellung von koextrudierten Mehrschichtenfolien noch effizienter realisiert werden kann.

An dieser Stelle sei noch beansprucht, dass die beschriebenen Verfahren auch noch durch weitere hier beschriebene technische Merkmale, insbesondere durch Merkmale einer Anlage und/oder einer Vorrichtung, ergänzt werden können, um die Verfahren vorteilhaft weiterzuentwickeln bzw. Verfahrensspezifikationen noch präziser darstellen bzw. formulieren zu können.

Darüber hinaus ist es auch noch vorteilhaft, wenn sich die Anlage durch digitale Einzelschichtverstellmöglichkeiten mit einer Absolutspaltmaßerfassung und/oder digitaler Datenerfassung und/oder digitaler Datensammlung und/oder digitaler Auswertung auszeichnet.

Mittels der vorliegenden Erfindung können Anlagenbediener vorteilhaft entlastet werden. In der Regel muss ein Anlagenbediener über sehr große Erfahrung und sehr großes Grundwissen verfügen, um erforderliche Einstellungen vornehmen zu können, damit eine Koextrusionsanlage, insbesondere ein Koextrusionsadapter, hinreichend gut eingestellt werden kann.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Weitere Merkmale, Effekte und Vorteile vorliegender Erfindung sind anhand anliegender Zeichnung und nachfolgender Beschreibung erläutert, in welchen beispielhaft eine Anlage zum Herstellen einer koextrudierten Mehrschichtenfolie sowie Anlagenkomponenten hiervon dargestellt und beschrieben ist.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine reduzierte Teilansicht einer Anlage zum Herstellen einer koextrudierten Mehrschichtenfolie mit einer Koextrusionsvorrichtung umfassend im Wesentlichen einen Koextrusionsadapter und ein Düsenteil, mit einer hinter dem Düsenteil angeordneten Messeinrichtung, mit einer Antriebseinheit für den Koextrusionsadapter, mit einer Anlagensteuerung umfassend eine Ausgabeeinheit und mit einer Controllereinheit;
- Figur 2: schematisch eine weitere Teilansicht der in der Figur 1 gezeigten Anlage;
- Figur 3: schematisch eine Schnittansicht durch eine mittels der in den Figuren 1 und 2 gezeigten Anlage hergestellten koextrudierten Mehrschichtenfolie mit einer Zentralschicht und hieran anextrudierten drei weiteren Schichten;
- Figur 4: schematisch eine Schnittansicht des Koextrusionsadapters der in den Figuren 1 und 2 gezeigten Anlage;
- Figur 5: schematisch eine perspektivische Teilansicht des in der Figur 4 gezeigten Koextrusionsadapters mit der hieran angeflanschten teilweise gezeigten Antriebseinheit; und

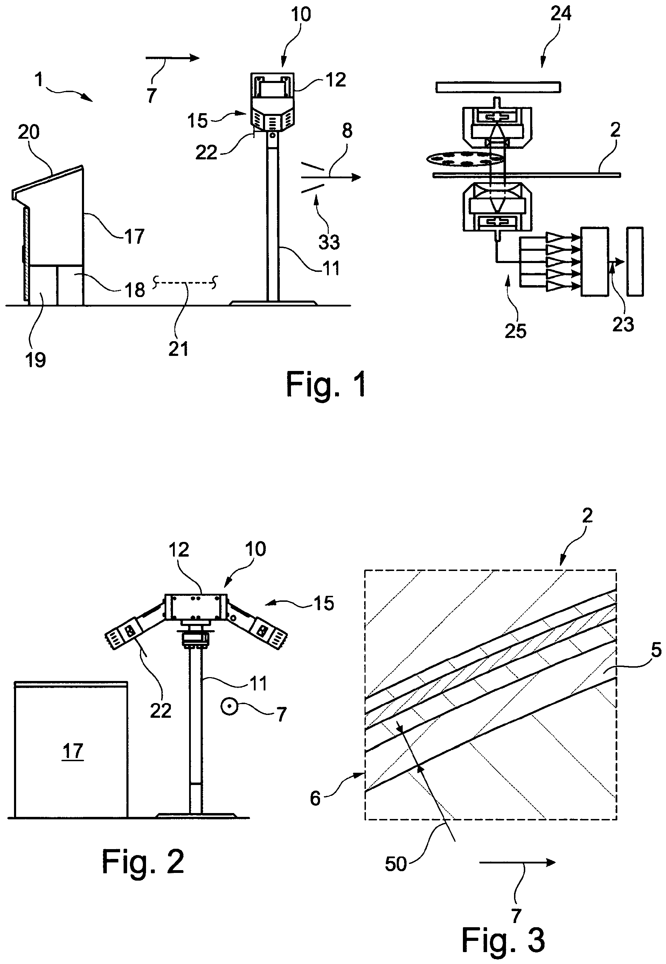

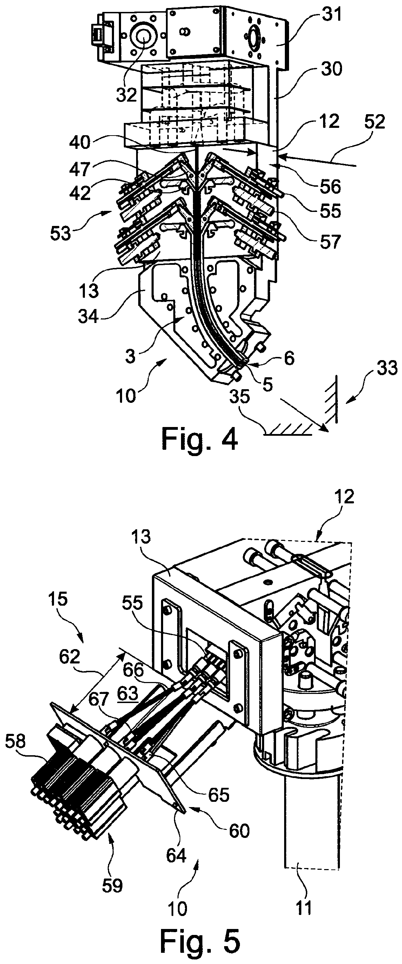

Die insbesondere in den Figuren 1 und 2 als ein erstes mögliches Ausfiihrungsbeispiel gezeigte Anlage 1 ist zum Herstellen einer koextrudierten Mehrschichtenfolie 2 eingerichtet, welche aus einem mehrlagigen Koextrusionsverbund 3 (vgl. beispielsweise Figur 4) erzeugt wird.

Während die beispielhaft in den Figuren 1 und 3 gezeigte koextrudierte Mehrschichtenfolie 2 aus einer extrudierten Zentralschicht 5 und drei weiteren koextrudierten Schichten 6 besteht, zeigt der in der Figur 4 ebenfalls nur beispielhaft dargestellte mehrlagige Koextrusionsverbund 3 eine extrudierte Zentralschicht 5 mit insgesamt vier weiteren koextrudierten Schichten 6.

Die Anlage 1 besitzt eine Maschinenrichtung 7, in welche der mehrlagige Koextrusionsverbund 3 bzw. die koextrudierte Mehrschichtenfolie 2 entlang einer Bearbeitungsstrecke 8 durch der Anlage 1 hindurch gefördert wird.

Gemäß den Darstellungen nach den Figuren 1 und 2 sind insbesondere eine Koextrusionsvorrichtung 10 zum Koextrudieren des mehrlagigen Koextrusionsverbundes 3 mit einem Gestell 11, an welchem ein Koextrusionsadapter 12 mit seinem Blockgrundkörper. 13 angeordnet ist, eine Antriebseinheit 15, eine Anlagensteuerung 17, welche insbesondere eine Controllereinheit 18, eine Speichereinheit 19, eine Ausgabeeinheit 20 sowie eine digitale Netzwerkverbindung 21, welche eine Vielzahl an digitalen Schnittstellen 22, 23 (nur exemplarisch gezeigt und beziffert) für eine Datenverbindung aller datenverarbeitungsrelevanten Anlagenkomponenten (nicht nochmals beziffert) aufweist, und eine Messeinrichtung 24 gezeigt, wobei Letztere in diesem Ausführungsbeispiel mit einer Infrarot-Apparatur 25 ausgerüstet ist.

Insbesondere in der Darstellung nach der Figur 4 ist die Koextrusionsvorrichtung 10 deutlicher mit dem Koextrusionsadapter 12 gezeigt, an welchem kopfseitig noch ein Kanalpaketteil 30 mit einer daran befestigten Verteilerplatte 31 zum Anflanschen von hier nicht dargestellten Extrudereinrichtungen festgelegt ist, um unterschiedliche Materialschmelzen 32 (nur exemplarisch beziffert). Fußseitig des Koextrusionsadapters 12 ist ein Düsenteil 33 angebracht, welche mittels eines Düsenanschlussflansches 34 zum Tragen des Düsenteils 33 an dem Koextrusionsadapter 12 angeflanscht ist. Das Düsenteil 33 ist als Breitschlitzdüse 35 ausgestaltet.

Jedenfalls ist die vorstehend bereits erwähnte Messeinrichtung 24 in Maschinenrichtung gesehen insbesondere hinter der Breitschlitzdüse bzw. dem Düsenteils 33 angeordnet, also stromab dieses Düsenteils 33.

Der hier beispielhaft gezeigte Koextrusionsadapter 12 besitzt einen Zentralkanal 40 zum Erzeugen der Zentralschicht 5 des mehrlagigen Koextrusionsverbundes 3 und insgesamt vier weitere Koextrusionskanäle 42 (nur exemplarisch beziffert) zum Erzeugen von vier weiteren Schichten 6 des Koextrusionsverbundes 3, nämlich zwei weiter innen liegende, weitere Schichten 6, welche unmittelbar mit der Zentralschicht 5 wechselwirkenden, sowie zwei weiter außen liegende, weitere Schichten 6, welche über die weiter innen lie-Senden, weiteren Schichten 6 mittelbar mit der Zentralschicht 5 wechselwirken bzw. verbunden sind.

Ferner weist der Koextrusionsadapter 12 eine Vielzahl an Einstellelementen 47 (nur exemplarisch beziffert) auf, mittels welchen nicht nur unterschiedliche Schichtdicken 50 (siehe Figur 3), sondern auch über die Breite des mehrlagigen Koextrusionsverbundes 3 unterschiedliche Schichtdickenprofile (nicht gezeigt) individuell eingestellt werden können. Da solchen Einstellelemente 47 aus dem Stand der Technik bereits bekannt sind, werden diese vorliegend nicht näher beschrieben. Jedenfalls sind pro Kanal 40 bzw. 42 in Breitenrichtung 52 des Koextrusionsadapter 12 gesehen mehrere solche Einstellelemente 47 nebeneinander angeordnet, so dass insbesondere in diesem Ausführungsbeispiel hinsichtlich der vier weiteren Koextrusionskanäle 42 nicht nur deren Kanalquerschnitte (nicht gesondert beziffert) und damit auch Schichtdicken 50 insgesamt individuell manipuliert, sondern darüber hinaus auch Kanalquerschnittprofile (nicht gezeigt) und insofern auch Schichtdickenprofile individuell eingestellt werden können.

Zum Betätigen der tief in dem Koextrusionsadapter 12 liegenden Einstellelemente 47 verfügt der Koextrusionsadapter 12 noch über eine entsprechende Anzahl an Verstelleinrichtungen 53, welche mit ihren eingangsseitigen Antriebselementen 55 bis über die Außenseite 56 des Koextrusionsadapters 12 ragen bzw. zumindest von außen zugänglich sind, so dass die Antriebseinheit 15 die Verstelleinrichtungen 53 antreiben kann, wodurch letztendlich auch die Einstellelemente 47 durch die Antriebseinheit 15 betätigt werden können. Die Verstelleinrichtungen 53 verfügen noch über Indexstiftelemente 57, mittels welchen die Relativpositionen (nicht beziffert) der in dem Koextrusionsadapter 12 angeordneten Einstellelemente 47 ermittelt und geprüft werden können. Hierfür sind die Indexstiftelemente 57 und die jeweils ihnen zugeordneten eingangsseitigen Antriebselemente 55 fest miteinander verbunden, so dass jede Bewegung eines eingangsseitigen Antriebselements 55 mit der Bewegung des zugehörigen Indexstiftelements 57 synchronisiert ist.

Hierbei wird die jeweilige Relativposition eines Einstellelements 47 mittels eines beispielhaft eingezeichneten Indexmaßes X₁, X₂ bzw. X₃ ermittelt, wobei ein derartiges Indexmaßes Xi, X₂ bzw. X₃ beispielsweise in Bezug auf eine Referenzfläche (nicht gesondert beziffert), etwa der Außenseite 56 des Koextrusionsadapters 12, gemessen werden kann. Alternativ kann eine solche Messung auch mittels eines Wirbelstromsensors, eines induktiven, kapazitiven oder optischen Abstands- oder Wegesensors, eines Messtasters oder dergleichen erfolgen.

Gemäß der Darstellung nach der Figur 5 sind der Koextrusionsadapter 12 und die Antriebseinheit 15 zumindest teilweise ohne Gehäuse gezeigt und es ist gut zu erkennen, dass eine Vielzahl an Aktuatoren 58 (nur exemplarisch beziffert) einerseits sehr eng beieinander zu einem Aktuatorenpaket 59 zusammengefasst und andererseits mittels einer Hitzeschildeinrichtung 60 mit einem Abstand 62 zu dem Koextrusionsadapter 13 bzw. dessen Blockgrundkörper 13 beabstandet angeordnet sind. Somit sind die einzelnen Aktuatoren 58 nicht nur durch die durch den Abstand 62 bedingte Lücke 63 besser vor einer von dem Koextrusionsadapter 13 ausgehenden Hitze geschützt, sondern zusätzlich auch noch durch ein Hitzeschild 64 der Hitzeschildeinrichtung 60, wobei im Sinne der Erfindung als Hitzeschild 64 bereits ein einfaches Metallblech angesehen wird.

Um die Lücke 63 zwischen den Aktuatoren 58 bzw. insbesondere deren ausgangsseitigen Abtriebselementen 65 und den eingangsseitigen Antriebselementen 55 der Verstelleinrichtungen 53 antriebstechnisch überbrücken zu können, sind zwischen jedem ausgangsseitigen Abtriebselement 65 eines Aktuators 58 und jedem eingangsseitigen Antriebselementen 55 einer dazugehörigen Verstelleinrichtung 53 jeweils ein Überbrückungselemente 66 in Gestalt einer biegsamen Kardanwelle 67 angeordnet.

Insofern kann mittels eines solchen flexibel ausgebildeten Überbrückungselements 66 auch ein Versatz zwischen einem ausgangsseitigen Abtriebselement 65 eines Aktuators 58 und einem dazugehörigen eingangsseitigen Antriebselementen 55 einer Verstelleinrichtung 53 ausgeglichen werden.

Insofern können die ausgangsseitigen Abtriebselemente 65 und einem dazugehörigen eingangsseitigen Antriebselementen 55 verschiedene bzw. versetzt zueinander angeordnete Rotationsachsen (nicht beziffert) aufweisen, wodurch es insbesondere möglich ist, die eingangsseitigen Antriebselemente 55 enger beieinander liegend anzuordnen als dies bei den ausgangsseitigen Abtriebselemente 65 der Aktuatoren 58 aufgrund der Baumaße der Aktuatoren 58 der Fall sein kann.

Für ein alternatives Ausfiihrungsbeispiel (nicht gezeigt) eines anderen Koextrusionsadapters 12 in Kombination mit einer anderen Antriebseinheit 15 für die Anlage 1 zum Herstellen einer koextrudierten Mehrschichtenfolie 2 bzw. für deren Vorrichtung 10 zum Koextrudieren eines mehrlagigen Koextrusionsverbundes 3 werden im Folgenden nur die Unterschiede zu dem in den Figuren 1 bis 5 gezeigten ersten Ausführungsbeispiel beschrieben, um Wiederholungen zu vermeiden. Während der andere Koextrusionsadapter 12 gemäß dem alternativen Ausführungsbeispiel im Wesentlichen baugleich mit dem Koextrusionsadapter 12 des ersten Ausfiihrungsbeispiels ist, unterscheidet sich die andere Antriebseinheit 15 des alternativen Ausführungsbeispiels durch einen Manipulator 70, an welchen ein einzelner Aktuator 58 angeordnet ist.

Mittels des Manipulators 70 kann jeder einzelne Aktuator 58 räumlich derart bewegt werden, dass jede Verstelleinrichtung 53 auf der gleichen Seite des Koextrusionsadapters 12 nacheinander einzeln angefahren werden kann.

Hierzu wird das ausgangsseitige Abtriebselement 65 des Aktuators 58 jeweils mit dem eingangsseitigen Antriebselement 55 in Wirkkontakt gebracht, so dass die jeweilige Verstelleinrichtung 53 angetrieben wird, und hierdurch das dazugehörige Einstellelement 47 hinsichtlich seiner Relativposition an bzw. in dem jeweiligen Extrusionskanal 5, 6 entsprechend manipuliert werden kann.

Hierbei wird auch das jeweils zugeordnete Indexstiftelement 57 entsprechend verlagert. Mit einer an dem Aktuator 58 zusätzlich angeordneten Sensoreinrichtung 71 kann das jeweilige Indexmaß Xi, X₂ bzw. X₃ ermittelt werden, mit welchem auf die Relativposition des betreffenden Einstellelements 47 bestimmt werden kann. Die Sensoreinrichtung 71 verfügt in diesem alternativen Ausführungsbeispiel über einen Laser-Wegsensor. Aber auch konfokale Wegmessungen mit optischen Sensoren oder Lasersensoren für 2D- und/oder 3D-Messungen sind möglich.

### Liste der verwendeten Bezugszeichen

- 1: Anlage
- 2: koextrudierte Mehrschichtenfolie
- 3: mehrlagige Koextrusionsverbund
- 5: extrudierte Zentralschicht
- 6: weitere, koextrudierte Schichten
- 7: Maschinenrichtung
- 8: Bearbeitungsstrecke
- 10: Koextrusionsvorrichtung
- 11: Gestell
- 12: Koextrusionsadapter
- 13: Blockgrundkörper
- 15: Antriebseinheit
- 17: Anlagensteuerung
- 18: Controllereinheit
- 19: Speichereinheit
- 20: Ausgabeeinheit
- 21: Netzwerkverbindung
- 22: digitale Schnittstelle der Antriebseinheit
- 23: digitale Schnittstelle der Messeinrichtung
- 24: Messeinrichtung
- 25: Infrarot-Apparatur
- 30: Kanalpaketteil
- 31: Verteilerplatte
- 32: Materialschmelzen
- 33: Düsenteil
- 34: Düsenanschlussflansch
- 35: Breitschlitzdüse
- 40: Zentralkanal
- 42: weitere Koextrusionskanäle
- 47: Einstellelemente
- 50: Schichtdicken
- 52: Breitenrichtung
- 53: Verstelleinrichtungen
- 55: eingangsseitige Antriebselemente
- 56: Außenseite
- 57: Indexstiftelemente
- 58: Aktuatoren
- 59: Aktuatorenpaket
- 60: Hitzeschildeinrichtung
- 62: Abstand
- 63: Lücke
- 64: Hitzeschild
- 65: ausgangsseitige Abtriebselemente
- 66: Überbrückungselement
- 67: biegsame Kardanwelle
- 70: Manipulator
- 71: Sensoreinrichtung

- X₁: erstes Indexmaß
- X₂: zweites Indexmaß
- X₃: drittes Indexmaß

## Patentansprüche

1. Vorrichtung (10) zum Koextrudieren eines mehrlagigen Koextrusionsverbundes (3) aus miteinander verbundenen Einzelschichten (5, 6) aus thermoplastischen Materialien, insbesondere einer koextrudierten Mehrschichtfolie (2), mit einem Koextrusionsadapter (12), welcher einen Zentralkanal (40) zum Erzeugen einer Zentralschicht (5) des Koextrusionsverbundes (3), wenigstens einen Koextrusionskanal (42) zum Erzeugen wenigsten einer mit der Zentralschicht (5) wechselwirkenden, weiteren Schicht (6) des Koextrusionsverbundes (3), eine Vielzahl an verlagerbaren Einstellelementen (47) zum Einstellen von Schichtdicken (50) oder Schichtdickenprofilen an den Einzelschichten (5, 6) des Koextrusionsverbundes (3) und Verstelleinrichtungen (53) zum Betätigen der Einstellelemente (47) aufweist, und mit einem Düsenteil (33), durch welches hindurch der mehrlagige Koextrusionsverbund (3) ausgetragen wird, wobei stromab des Düsenteils (33) eine Messeinrichtung (24) zum automatischen Messen von Schichtdicken (50) oder Schichtdickenprofilen des mehrlagigen Koextrusionsverbundes (3) angeordnet ist, wobei die Vorrichtung (10) dazu eingerichtet ist, mittels aus gewonnenen Messdaten der Messeinrichtung (24) die Vielzahl an verlagerbaren Einstellelementen (47) automatisch zu manipulieren, ***dadurch gekennzeichnet, dass*** ein eingangsseitiges Antriebselement (55) einer Verstelleinrichtung (53) und ein ausgangsseitiges Abtriebselement (65) eines Aktuators (58) verschiedene Rotationsachsen aufweisen, wobei die Rotationsachse versetzt zueinander angeordnet sind.

2. Vorrichtung (10) nach Anspruch 1, ***dadurch gekennzeichnet, dass*** zwischen einem Aktuator (58) und dem Koextrusionsadapter (12) ein Abstand (62) von mehr als 50 mm, vorzugsweise von mehr als 100 mm oder mehr als 200 mm, vorhanden ist.

3. Vorrichtung (10) nach einem der vorherigen Ansprüche, ***dadurch gekennzeichnet, dass*** zwischen einer Verstelleinrichtung (53) und einem Aktuator (58), insbesondere zwischen einem eingangsseitigen Antriebselement (55) einer Verstelleinrichtung (53) und einem ausgangseitigen Abtriebselement (65) eines Aktuators (58), ein flexibles Überbrückungselement (66), insbesondere ein flexibles Hitzeüberbrückungselement, angeordnet ist.

4. Vorrichtung (10) nach einem der vorherigen Ansprüche, ***dadurch gekennzeichnet, dass*** mehrere Aktuatoren (58) zu einer Antriebseinheit (15), insbesondere zu einem Aktuatorenpaket (59), zusammengefasst sind.

5. Vorrichtung (10) nach einem der vorherigen Ansprüche, ***gekennzeichnet durch*** wenigstens einen Manipulator mit einem oder mehreren Aktuatoren (58), mittels welchem wenigstens ein Aktuator (58) mit den Verstelleinrichtungen (53) des Koextrusionsadapters (12) temporär in Wirkkontakt bringbar oder mittels welchem wenigstens ein Aktuator (58) von den Verstelleinrichtungen (53) des Koextrusionsadapters (12) temporär beabstandbar ist.

6. Anlage (1) mit einer Vorrichtung nach einem der vorhergehenden Ansprüche zum Herstellen einer koextrudierten Mehrschichtenfolie (2) mit wenigstens einer Extrudereinrichtung zum Bereitstellen von Materialschmelzen (32) aus thermoplastischen Materialien, mit einer einen Koextrusionsadapter (12) und ein Düsenteil (33) umfassenden Vorrichtung (10) zum Koextrudieren eines mehrlagigen Koextrusionsverbundes (3) aus miteinander verbundenen Einzelschichten (5, 6), wobei der Koextrusionsadapter (12) einen Zentralkanal (40) zum Erzeugen einer Zentralschicht (5) des Koextrusionsverbundes (3), wenigstens einen Koextrusionskanal (42) zum Erzeugen wenigsten einer mit der Zentralschicht (5) wechselwirkenden, weiteren Schicht (6) des Koextrusionsverbundes (3), eine Vielzahl an verlagerbaren Einstellelementen (47) zum Einstellen von Schichtdicken (50) und/oder Schichtdickenprofilen an Einzelschichten (5, 6) des Koextrusionsverbundes (3) sowie Verstelleinrichtungen (53) zum Betätigen der Einstellelemente (47) aufweist, mit einer Antriebseinheit (15) zum Antreiben der Verstelleinrichtungen (53), mit einer Messeinrichtung (24) zum Messen von Schichtdicken (50) und/oder Schichtdickenprofilen an Einzelschichten (5, 6) des mehrlagigen Koextrusionsverbundes (3), wobei die Messeinrichtung (24) dazu eingerichtet ist, stromab des Düsenteils (33) die Schichtdicken (50) und/oder die Schichtdickenprofile zu messen, und mit einer Anlagensteuerung (17) zum Steuern der Anlage (1), wobei die Anlagensteuerung (17) eine Controllereinheit (18) umfasst, welche dazu eingerichtet ist, dass Relativpositionen von Einstellelementen (47) in Abhängigkeit von an der das Düsenteil (33) bereits verlassenden koextrudierte Mehrschichtenfolie (2) gemessenen Schichtdicken (50) und/oder Schichtdickenprofilen automatisch, bevorzugt iterativ, mittels der Antriebseinheit (15) manipulierbar sind, wobei ein eingangsseitiges Antriebselement (55) einer Verstelleinrichtung (53) und ein ausgangsseitiges Abtriebselement (65) eines Aktuators (58) verschiedene Rotationsachsen aufweisen, wobei die Rotationsachse versetzt zueinander angeordnet sind.

7. Anlage (1) nach Anspruch 6, wobei die Anlage (1) eine Eingabeeinheit aufweist, welche dazu eingerichtet ist, insbesondere Schichtdicken (50) und/oder Schichtdickenprofile, und/oder Kombinationen hiervon zu programmieren.

8. Anlage (1) nach einem der Ansprüche 6 oder 7, wobei die Anlagensteuerung (17) elektrische Datenschnittstellen (22, 23), insbesondere elektronische bzw. digitale Datenschnittstellen (22, 23), zum Kommunizieren mit den vorliegenden Controllereinheiten (18) und/oder Speichereinrichtungen (19) aufweist, insbesondere auch in Bezug auf bereitgestellten Betriebsdaten anderer Anlagen (1).

9. Anlage (1) nach einem der Ansprüche 6 bis 8, wobei die Anlage (1) eine Vorrichtung (10) nach einem der Ansprüche 1 bis 5 umfasst.

10. Verfahren zum Betreiben einer Anlage nach einem der Ansprüche 6 bis 9, und/oder einer Anlage mit einer Vorrichtung nach einem der Ansprüche 1 bis 5, zum Herstellen einer koextrudierten Mehrschichtenfolie (2) bestehend aus mehreren Einzelschichten (5, 6), bei welchem Schichtdicken (50) und/oder Schichtdickenprofile von Einzelschichten (5, 6) der Mehrschichtenfolie (2) nach dem Austreten aus einem Düsenteil (33) einer Koextrusionsvorrichtung (10) gemessen und hierbei entsprechend Messdaten erzeugt werden, und bei welchem in Abhängigkeit von diesen Messdaten Schichtdicken (50) und/oder Schichtdickenprofile des mehrlagigen Koextrusionsverbundes 4 (3) vor dem Düsenteils (33) korrigiert, insbesondere inline korrigiert werden.

11. Verfahren nach Anspruch 10, wobei mittels automatischer Datenanalyse Einstellungen zum Optimieren eines Verfahrens zum Koextrudieren und/oder eines Verfahrens zum Bereiten der Anlage (1) automatisch vorgenommen und/oder zur Auswahl automatisch vorgeschlagen werden.

## Claims

1. An apparatus (10) for coextruding a multi-layered coextrusion composite (3) made of interconnected individual layers (5, 6) made of thermoplastic materials, in particular a coextruded multi-layer film (2), having a coextrusion adapter (12) which has a central channel (40) for generating a central layer (5) of the coextrusion composite (3), at least one coextrusion channel (42) for generating at least one further layer (6) of the coextrusion composite (3) interacting with the central layer (5), a plurality of displaceable setting elements (47) for setting layer thicknesses (50) or layer thickness profiles on the individual layers (5, 6) of the coextrusion composite (3) and adjusting devices (53) for actuating the setting elements (47), and having a nozzle part (33) through which the multi-layered coextrusion composite (3) is discharged, wherein a measuring device (24) for automatically measuring layer thicknesses (50) or layer thickness profiles of the multi-layered coextrusion composite (3) is arranged downstream of the nozzle part (33), wherein the apparatus (10) is set up to manipulate the plurality of displaceable setting elements (47) automatically by means of measurement data obtained from the measuring device (24), **characterized in that** an inlet-side drive element (55) of an adjusting device (53) and an outlet-side output element (65) of an actuator (58) have different axes of rotation, wherein the axes of rotation are arranged offset from one another.

2. The apparatus (10) according to Claim 1, **characterized in that** there is a distance (62) of more than 50 mm, preferably of more than 100 mm or more than 200 mm, between an actuator (58) and the coextrusion adapter (12).

3. The apparatus (10) according to any one of the preceding claims, **characterized in that** a flexible bridging element (66), in particular a flexible heat bridging element, is arranged between an adjusting device (53) and an actuator (58), in particular between an inlet-side drive element (55) of an adjusting device (53) and an outlet-side output element (65) of an actuator (58).

4. The apparatus (10) according to any one of the preceding claims, **characterized in that** multiple actuators (58) are combined to form a drive unit (15), in particular an actuator package (59).

5. The apparatus (10) according to any one of the preceding claims, **characterized by** at least one manipulator having one or more actuators (58), by means of which at least one actuator (58) can be brought temporarily into operative contact with the adjusting devices (53) of the coextrusion adapter (12) or by means of which at least one actuator (58) can be temporarily spaced apart from the adjusting devices (53) of the coextrusion adapter (12).

6. A plant (1) having an apparatus according to any one of the preceding claims for producing a coextruded multi-layer film (2) having at least one extruder device for providing material melts (32) made of thermoplastic materials, having a device (10) comprising a coextrusion adapter (12) and a nozzle part (33) for coextruding a multi-layered coextrusion composite (3) made of interconnected individual layers (5, 6), wherein the coextrusion adapter (12) has a central channel (40) for generating a central layer (5) of the coextrusion composite (3), at least one coextrusion channel (42) for generating at least one further layer (6) of the coextrusion composite (3) interacting with the central layer (5), a plurality of displaceable setting elements (47) for setting layer thicknesses (50) and/or layer thickness profiles on individual layers (5, 6) of the coextrusion composite (3), as well as adjusting devices (53) for actuating the setting elements (47), having a drive unit (15) for driving the adjusting devices (53), having a measuring device (24) for measuring layer thicknesses (50) and/or layer thickness profiles on individual layers (5, 6) of the multi-layered coextrusion composite (3), wherein the measuring device (24) is set up to measure the layer thicknesses (50) and/or the layer thickness profiles downstream of the nozzle part (33), and having a plant controller (17) for controlling the plant (1), wherein the plant controller (17) comprises a controller unit (18) which is set up so that relative positions of setting elements (47) can be manipulated automatically, preferably iteratively, by means of the drive unit (15) as a function of layer thicknesses (50) and/or layer thickness profiles measured on the coextruded multi-layer film (2) already leaving the nozzle part (33), wherein an inlet-side drive element (55) of an adjusting device (53) and an outlet-side output element (65) of an actuator (58) have different axes of rotation, wherein the axes of rotation are arranged offset from one another.

7. The plant (1) according to Claim 6, wherein the plant (1) has an input unit which is set up to program in particular layer thicknesses (50) and/or layer thickness profiles, and/or combinations thereof.

8. The plant (1) according to any one of Claims 6 or 7, wherein the plant controller (17) has electrical data interfaces (22, 23), in particular electronic or, respectively digital data interfaces (22, 23), for communicating with the present controller units (18) and/or storage devices (19), in particular also in relation to provided operating data of other plants (1).

9. The plant (1) according to any one of Claims 6 to 8, wherein the plant (1) comprises an apparatus (10) according to any one of Claims 1 to 5.

10. A method for operating a plant according to any one of Claims 6 to 9, and/or a plant having an apparatus according to any one of Claims 1 to 5, for producing a coextruded multi-layer film (2) consisting of multiple individual layers (5, 6), in which layer thicknesses (50) and/or layer thickness profiles of individual layers (5, 6) of the multi-layer film (2) are measured after they emerge from a nozzle part (33) of a coextrusion device (10) and measurement data are correspondingly generated in the process, and in which layer thicknesses (50) and/or layer thickness profiles of the multi-layered coextrusion composite (3) are corrected in front of the nozzle part (33), in particular corrected inline, as a function of said measurement data.

11. The method according to Claim 10, wherein by means of automatic data analysis settings for optimizing a method for coextruding and/or a method for preparing the plant (1) are automatically performed and/or automatically suggested for selection.

## Revendications

1. Dispositif (10) de coextrusion d'un composite de coextrusion (3) multicouche constitué par des couches individuelles (5, 6) reliées les unes aux autres en matériaux thermoplastiques, en particulier d'une feuille multicouche (2) coextrudée, présentant un adaptateur de coextrusion (12), qui présente un canal central (40) destiné à générer une couche centrale (5) du composite de coextrusion (3), au moins un canal de coextrusion (42) destiné à générer au moins une autre couche (6) du composite de coextrusion (3), interagissant avec la couche centrale (5), une multitude d'éléments de réglage (47) déplaçables, destinés à régler des épaisseurs de couche (50) ou des profils d'épaisseur de couche au niveau des couches individuelles (5, 6) du composite de coextrusion (3) et des appareils d'ajustement (53) destinés à actionner les éléments de réglage (47) et présentant une partie de buse (33), à travers laquelle le composite de coextrusion (3) multicouche est évacué, un appareil de mesure (24), destiné à la mesure automatique d'épaisseurs de couche (50) ou de profils d'épaisseur de couche du composite de coextrusion (3) multicouche étant agencé en aval de la partie de buse (33), le dispositif (10) étant conçu pour manipuler automatiquement la multitude d'éléments de réglage (47) déplaçables au moyen de données de mesures obtenues de l'appareil de mesure (24), **caractérisé en ce qu'**un élément d'entraînement (55) côté entrée d'un appareil d'ajustement (53) et un élément d'entraînement (65) côté sortie d'un actionneur (58) présentent différents axes de rotation, les axes de rotation étant agencés de manière décalée les uns par rapport aux autres.

2. Dispositif (10) selon la revendication 1, **caractérisé en ce qu'**une distance (62) de plus de 50 mm, de préférence de plus de 100 mm ou de plus de 200 mm existe entre un actionneur (58) et l'adaptateur de coextrusion (12).

3. Dispositif (10) selon l'une des revendications précédentes, **caractérisé en ce qu'**un élément de pontage (66) souple, en particulier un élément de pontage thermique souple, est agencé entre un appareil d'ajustement (53) et un actionneur (58), en particulier entre un élément d'entraînement (55) côté entrée d'un appareil d'ajustement (53) et un élément d'entraînement (65) côté de sortie d'un actionneur (58).

4. Dispositif (10) selon l'une des revendications précédentes, **caractérisé en ce que** plusieurs actionneurs (58) sont rassemblés en une unité d'entraînement (15), en particulier en un paquet d'actionneurs (59).

5. Dispositif (10) selon l'une des revendications précédentes, **caractérisé par** au moins un manipulateur présentant un ou plusieurs actionneurs (58), au moyen duquel au moins un actionneur (58) peut être mis temporairement en contact actif avec les appareils d'ajustement (53) de l'adaptateur de coextrusion (12) ou au moyen duquel au moins un actionneur (58) peut être temporairement tenu éloigné des appareils d'ajustement (53) de l'adaptateur de coextrusion (12).

6. Installation (1) présentant un dispositif selon l'une des revendications précédentes, destinée à fabriquer une feuille multicouche (2) coextrudée à l'aide d'au moins un appareil d'extrusion destiné à mettre à disposition des masses fondues de matériau (32) constituées par des matériaux thermoplastiques, présentant un dispositif (10) présentant un adaptateur de coextrusion (12) et une partie de buse (33), destiné à coextruder un composite de coextrusion (3) multicouche constitué par des couches individuelles (5, 6) reliées les unes aux autres, l'adaptateur de coextrusion (12) présentant un canal central (40) destiné à générer une couche centrale (5) du composite de coextrusion (3), au moins un canal de coextrusion (42) destiné à générer au moins une autre couche (6) du composite de coextrusion (3), interagissant avec la couche centrale (5), une multitude d'éléments de réglage (47) déplaçables, destinés à régler des épaisseurs de couche (50) et/ou des profils d'épaisseur de couche au niveau des couches individuelles (5, 6) du composite de coextrusion (3) ainsi que des appareils d'ajustement (53) destinés à actionner les éléments de réglage (47), présentant une unité d'entraînement (15) destinée à entraîner les appareils d'ajustement (53), présentant un appareil de mesure (24) destiné à mesurer des épaisseurs de couche (50) et/ou des profils d'épaisseur de couche au niveau de couches individuelles (5, 6) du composite de coextrusion (3) multicouche, l'appareil de mesure (24) étant conçu pour mesurer les épaisseurs de couche (50) et/ou les profils d'épaisseur de couche en aval de la partie de buse (33) et présentant une commande d'installation (17) destinée à commander l'installation (1), la commande d'installation (17) comprenant une unité de contrôleur (18) qui est conçue pour que les positions relatives d'éléments de réglage (47) puissent être manipulées automatiquement, de préférence par itération, au moyen de l'unité d'entraînement, en fonction des épaisseurs de couche (50) et/ou des profils d'épaisseur de couche mesurés au niveau de la feuille multicouche (2) coextrudée quittant déjà la partie de buse (33), un élément d'entraînement (55) côté entrée d'un appareil d'ajustement (53) et un élément d'entraînement (65) côté sortie d'un actionneur (58) présentant différents axes de rotation, les axes de rotation étant agencés de manière décalée les uns par rapport aux autres.

7. Installation (1) selon la revendication 6, l'installation (1) présentant une unité de saisie qui est conçue pour programmer en particulier des épaisseurs de couche (50) et/ou des profils d'épaisseur de couche et/ou leurs combinaisons.

8. Installation (1) selon l'une des revendications 6 ou 7, la commande d'installation (17) présentant des interfaces de données (22, 23) électriques, en particulier des interfaces de données (22, 23) électroniques ou, selon le cas, numériques, destinées à communiquer avec les unités de contrôleur (18) et/ou les appareils d'accumulation (19) présents, en particulier également eu égard à des données de fonctionnement mises à disposition d'autres installations (1).

9. Installation (1) selon l'une des revendications 6 à 8, l'installation (1) comprenant un dispositif (10) selon l'une des revendications 1 à 5.

10. Procédé de fonctionnement d'une installation selon l'une des revendications 6 à 9 et/ou d'une installation présentant un dispositif selon l'une des revendications 1 à 5, destiné à fabriquer une feuille multicouche (2) coextrudée constituée par plusieurs couches individuelles (5, 6), dans lequel des épaisseurs de couche (50) et/ou des profils d'épaisseur de couche de couches individuelles (5, 6) de la feuille multicouche (2) sont mesurés après la sortie d'une partie de buse d'un dispositif de coextrusion (10) et des données de mesure sont générées de manière correspondante et dans lequel, en fonction de ces données de mesure, des épaisseurs de couche (50) et/ou des profils d'épaisseur de couche du composite de coextrusion (3) multicouche sont corrigés, en particulier corrigés en ligne, en amont de la partie de buse (33).

11. Procédé selon la revendication 10, des réglages destinés à l'optimisation d'un procédé de coextrusion et/ou d'un procédé de préparation de l'installation (1) étant réalisés automatiquement et/ou proposés automatiquement pour une sélection au moyen d'une analyse automatique de données.
